# EUROPEAN PATENT APPLICATION

(11) **EP 3 598 580 A1**
(43) Date of publication of application: **22.01.2020**
(21) Application number: 19186408.1
(22) Date of filing: 16.07.2019
(51) Int. Cl.: H01R 4/02, H01R 43/02, B23K 20/12, B23K 101/38, B23K 103/10, B23K 103/12

(54) **METHOD FOR JOINING TWO OR MORE ELECTRICAL CONDUCTORS, DEVICE FOR JOINING TWO OR MORE ELECTRICAL CONDUCTORS, AND ELECTRICAL CONNECTION BETWEEN TWO OR MORE CONDUCTORS**

(30) Priority: 20.07.2018 DE 102018212158
(71) Applicant: TE Connectivity Germany GmbH, 64625 Bensheim (DE); Technische Universität Ilmenau, 98693 Ilmenau (DE)
(72) Inventor: Hauck, Uwe, 14532 Kleinmachnow (DE); Schmidt, Helge, 67346 Speyer (DE); Dressel, André, 68623 Lampertheim (DE); Blumenschein, Rudi, 73479 Ellwangen (DE); Bergmann, Jean Pierre, 99096 Erfurt (DE); Regensburg, Anna, 87494 Rückholz (DE)
(74) Representative: Grünecker Patent- und Rechtsanwälte PartG mbB

(57) **Abstract**

The invention relates to a method (V) for joining two or more electrical conductors (10, 11, 12) by means of friction stir welding, wherein at least one of the conductors (10, 12) comprises a bundle (20) of conductor wires (21). Moreover, a device (100) for joining two or more electrical conductors (10, 11, 12) by means of friction stir welding is shown, wherein the device (100) is configured so that at least one of the conductors (10, 12) comprises a bundle (20) of conductor wires (21). Furthermore, the invention comprises an electrical connection (50) between two or more conductors (10, 11, 12), wherein the two conductors (10, 11, 12) are connected through a friction stir welding connection, and wherein one of the conductors (10, 12) comprises a bundle (20) of conductor wires (21).

## Description

The invention relates to a method for joining two or more electrical conductors. The invention further relates to a device for joining two or more electrical conductors, and an electrical connection between two or more conductors.

The connection of two or more electrical conductors by means of friction stir welding is known. This is in particular a joining method for producing permanent connections.

However, connections up to now have been rigid and therefore have limited applications.

The problem of the invention is to provide a solution with a wider scope of application.

According to the invention, this is solved in that at least one of the conductors comprises a bundle of conductor wires. The resulting connection is at least partly flexible and has a wider scope of application.

A device according to the invention for joining two or more electrical conductors by means of friction stir welding is characterised in that the device is configured so that at least one of the conductors comprises a bundle of conductor wires.

An electrical connection between two or more conductors, which is produced in accordance with the invention, wherein the two or more conductors are connected through a friction stir welding connection, is characterised in that one of the conductors comprises a bundle of conductor wires.

The solution according to the invention can be further improved with the following configurations and further developments which are themselves each advantageous and which can be combined with one another as desired.

In a first advantageous configuration, at least one of the conductors can have a conductor mesh. This can enable a particularly high degree of flexibility. A conductor mesh can comprise several bundles of conductor wires which are interwoven with one another. Alternatively, individual conductor wires can also be interwoven with one another, for example when the electrical power to be transported is appropriately low.

In a further advantageous configuration, at least one of the conductors can be a stranded conductor or comprise a stranded conductor. Such conductors are widespread which means that the method can be applied in a wide scope. In a stranded conductor, several conductor wires can run alongside one another without being interwoven with one another.

The method is particularly advantageous when it is used to connect aluminium and copper, i.e. when one electrical conductor comprises aluminium and the other conductor comprises copper. The conductors can consist of aluminium and copper respectively or alloys containing these metals. Through the friction stir welding method, the two metals are mixed with one another, as a result of which a particularly advantageous connection is created.

Alternatively, the conductors can also consist of the same material, for example of copper or aluminium or alloys containing these materials.

In order to reduce the movement of the conductor wires during friction stir welding and thus improve the connection, the bundle or conductor can be laterally clamped on a joining gap. The joining gap in this case is the region in which the two conductors abut one another. The device can comprise a clamping device for this, which at least laterally clamps the bundle or conductor. The clamping device can comprise clamping jaws, which press laterally against the conductor. The distance of a clamping jaw to the joining gap should be as small as possible, in order to be able to hold the wires particularly securely. On the other hand, there must be sufficient space available around the joining gap for the friction stir tool to be able to work. For example, a clamping jaw cannot be further away from the gap than 1.5-times the width of a friction stir head.

In order to better position the conductor wires, the bundle of conductor wires can be clamped on all sides along a circumference. The device can have a clamping device, which clamps the bundle of conductors or the conductor, as the case may be, along a circumference. The device can, for example, have several clamping jaws which are able to be positioned independently of one another and which are movable towards the conductor along various directions. Alternatively, there can also be one single clamping element present which has a tapering receptacle, for example, which provides for automatic clamping along various directions.

The bundle of conductor wires can be compacted before and/or during the friction stir welding. Such a compacting can take place, for example, by mechanical pressing-together and/or an at least partial joining of the conductor wires for example through ultrasound welding. The compacting can be carried out in particular by a clamping device, which means that this clamping device has a dual function. The compacting can at the same time be a clamping, so that these two steps are performed together and time is saved.

In a configuration which can be carried out particularly simply, welding can take place at certain points. The connection points can, for example, be disposed uniformly along a joining gap in order to enable a uniform distribution of forces.

In a configuration which enables a particularly strong connection, welding can take place along a line. The line can, for example, run along the entire length of a joining gap in order to avoid peaks of force and to generate a high electrically effective connection cross-section which resultingly reduces the creation of heat.

In order to facilitate the connection, an overlapping element can be used, which overlaps each of the two conductors in part. The overlapping element can be fused on at least in part. In an electrical connection according to the invention, the overlapping element can be fused on or comprise fused-on areas. A mutual diffusion of the materials involved can represent an advantageous process result and generate a targeted material property in the transition zone between the conductor substances.

In an advantageous configuration, the overlapping element can be configured as a plate. Such an overlapping element can be particularly simple to produce. It can be a metal sheet, for instance.

A material for the overlapping element can be selected such that it exerts a flow-improving and/or crosslinking-activating effect during the friction stir welding step, so that the connection created is more stable. The overlapping element can comprise solders, for instance, and/or be coated with solders. Tin or zinc, for example, can be present.

The overlapping element can run perpendicular to a plane formed by a connecting seam and/or a joining gap, in order to enable a compact configuration.

The overlapping element can have a U-shaped cross-section at least in part. The overlapping element can in this manner receive and or fix the conductor at least in part.

In an advantageous configuration, the overlapping element can laterally support the conductor with the bundle at least in part. As a result of this, the movement of the conductor wires during the friction stir welding can be reduced. The overlapping element can fulfil a clamping function here at least in part.

In order to enable a particularly good positioning of the conductor wires, the overlapping element can at least partly surround the conductor with the bundle. For example, this can take place with a U-shaped cross-section into which the conductor can be introduced.

At least one of the conductors can have an elongate configuration, in which the extent in one dimension is larger than in the other dimensions, for example larger by a factor of 5. The conductor can be configured to be strip-shaped, for example, in order to enable twisting.

Both conductors can have a bundle of conductor wires in order to obtain a particularly flexible connection.

The method can, for example, also be used in order to produce a connection between a rigid conductor and two or more conductors with bundles of conductor wires. Forexample, a splitting connection, also referred to as a Y-splice, can be produced.

The invention is explained below by way of example and in greater detail on the basis of advantageous configurations with reference to the drawings. The advantageous further developments and configurations depicted in this instance are each independent of one another and can be combined with one another as desired, depending on how this is necessary in the specific application.

In the drawings:
- Fig. 1: shows a schematic perspective view of a first embodiment of a method;
- Fig. 2: shows a schematic perspective view of a second embodiment of a method;
- Fig. 3: shows a schematic perspective view of a third embodiment of a method;
- Fig. 4: shows a schematic perspective view of a fourth embodiment of a method;
- Fig. 5: shows a schematic perspective view of a fifth embodiment of a method;
- Fig. 6: shows a schematic depiction of a first variant of a method step;
- Fig. 7: shows a schematic depiction of a second variant of a method step;
- Fig. 8: shows a schematic depiction of various conductors;
- Fig. 9: shows a schematic lateral view of a method;
- Fig. 10: shows a schematic top view of a method;
- Fig. 11: shows a schematic perspective view of a fifth embodiment of a method;
- Fig. 12: shows a schematic perspective view of an electrical connection produced with the fifth embodiment of a method.

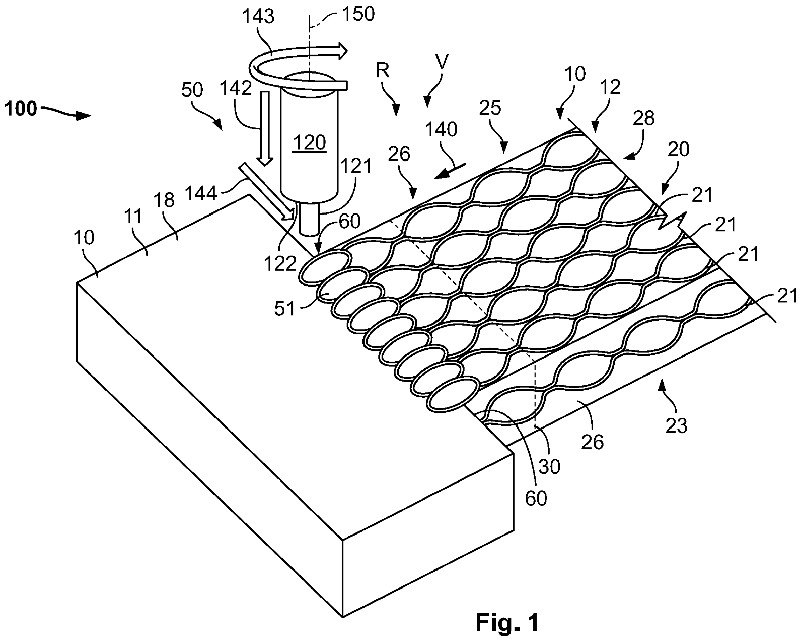

Fig. 1 shows a first embodiment of a method V for connecting two electrical conductors 10.

A first conductor 10, 11 is a solid conductor 18 that consists, for example, of an elongate piece of metal.

A second conductor 10, 12 comprises a bundle 20 of conductor wires 21. The second conductor 12 is more flexible than the first conductor 11 as a result.

The two conductors 10 can in particular be strip-shaped conductors 28 which are substantially larger along one dimension than along the two other dimensions.

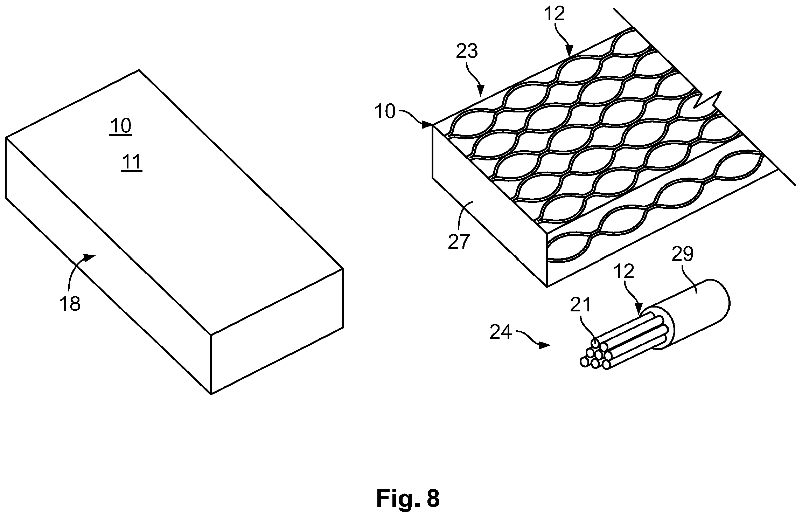

Fig. 1 depicts a friction stir welding step R of the method V, in which a friction stir welding tool 120 with a pin 121 is used to connect the two conductors 10, 11, 12. For this purpose, the second conductor 12 is pressed by its front side 27 (see also Fig. 8) onto the first conductor 11 along a connecting direction 140. The pin 121 is then pressed in along a press-on direction 142 into a joining gap 60 between the first conductor 11 and the second conductor 12, and the friction stir welding tool 120 rotates along a rotation direction 143 which runs around a rotation axis 150. The heat which is created heats or melts the first conductor 11 and a second conductor 12 in the region of the joining gap 60. The heated volume is mixed by the rotation of the pin 121 which is additionally moved along a movement direction 141 that runs along the joining gap 60. After the friction stir welding tool 120 has passed, the heated mass cools down and produces a secure connection between the two conductors 10, 11, 12.

Through the method V, a connecting seam 51 is created in an electrical connection 50 which comprises the conductors 10 which are connected to one another.

The second conductor 12 can in particular have a conductor mesh 23 in which individual conductor wires 21 are interwoven with one another or in which several bundles 20 of conductor wires 21 are interwoven with one another.

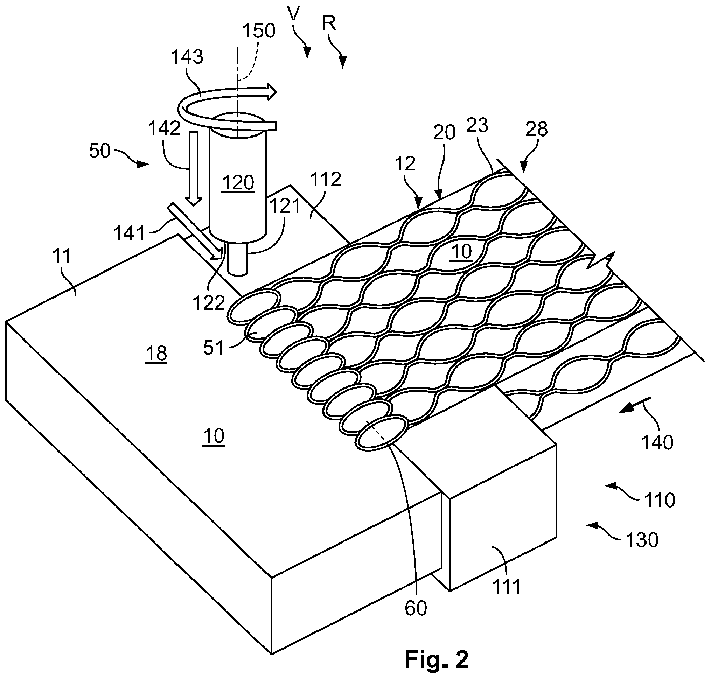

Fig. 2 depicts a second embodiment of a method V, in which the second conductor is laterally clamped during the friction stir welding R. As a result, the conductor wires 21 are held and can yield less extensively to the pin 121. As a result, a better connection is obtained. In order to obtain such clamping, a device 100 has a clamping device 110, which in particular comprises a first clamping jaw 111 and a second clamping jaw 112 opposite the first clamping jaw 111. The two clamping jaws 111, 112 press along two opposing clamping directions 161, 162 at the joining gap 60 at lateral surfaces 26 of the second conductor 12. The clamping jaws 111, 112 in particular prevent the conductor wires 21 from being able to be deflected along the movement direction 141 when the prolongation 121 moves. A movement of the conductor wires 21 out of an upper side 25 can be prevented by the friction stir welding tool 120, for example by shoulders 122 adjacent to the pin 121.

In the embodiment shown, the clamping jaws 111, 112 bear against the first conductor 111 along the connecting direction 41. If necessary, a small distance can be present here along the connecting direction 140. This distance should however not be too large in order to keep a movement of the conductor wires 21 small. The distance can, for example, be smaller than three times the thickness of the prolongation 121.

The clamping device 110 shown here at the same time represents a compacting device 130, with which the conductor wires 21 and thus the conductor 12 are compacted. Such compacting can improve the connection, since the density of the conductor 12 is increased at the joining gap 60, as a result of which a stronger connection can be possible.

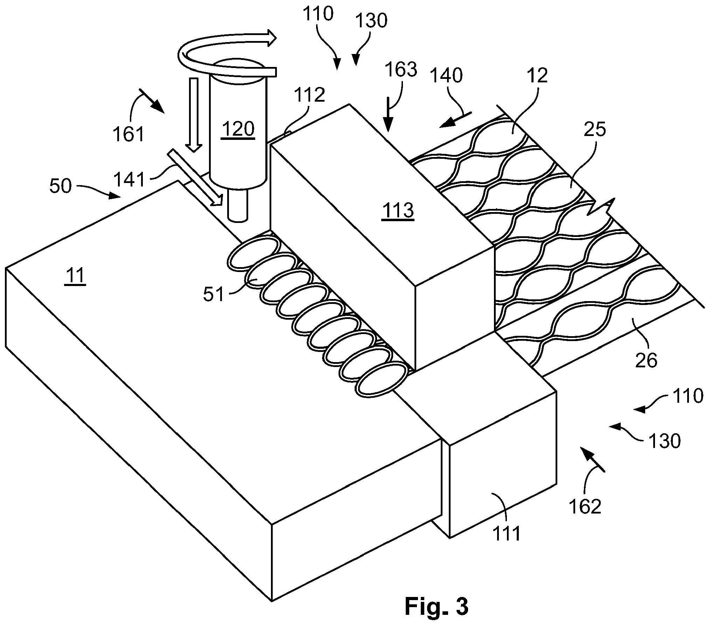

Fig. 3 shows a third embodiment of a method V. Alongside the lateral clamping jaws 111, 112, another clamping jaw 113 is used here, which presses along a clamping direction 163 onto the upper side 25 of the second conductor 12 close to the joining gap 60.

The third clamping jaw 113 is spaced further apart, along the connecting direction 140, from the first conductor than the two clamping jaws 111, 112, in order to make space available for the friction stir welding head 120.

Through the combination of the three clamping jaws 111, 112, 113 and a fixed element, which is not shown in any greater detail, at an underside of the conductor 12, the conductor 12 is clamped on all sides at the joining gap along a circumference 30. At the same time, the conductor 12 is compacted by the clamping device 110, so that the clamping device is, at the same time, a compacting device 130.

With the method, it is particularly possible to produce connections between copper and aluminium, which are otherwise difficult to achieve. For example, the conductors 10 can contain copper and/or aluminium and/or alloys with these elements. Of course, conductors 10, 11, 12 consisting of the same material can be used.

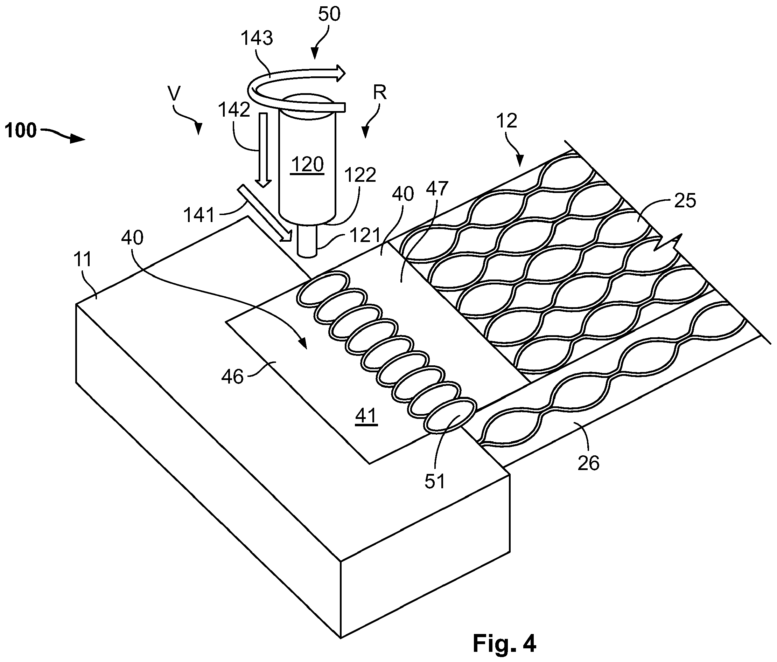

Fig. 4 shows a fourth embodiment of the method V. Alongside the first conductor 11 and the second conductor 12, an overlapping element 40 which partly overlaps each of the conductors 10, 11, 12 is used here. A first section 46 overlaps the first conductor 11, a second section 47 overlaps the second conductor 12. The overlapping element 40 can be used to fix the conductor wires 21. Furthermore, the overlapping element 40 can make the connection 50 more stable in the finished state. The connection element 40 can be at least partly fused together with the first conductor 11 and the second conductor 12 in the friction stir welding step R, in order to be connected to the conductors 10, 11, 12. Through suitable selection of the material for the overlapping element 40, it is possible to achieve an improvement of the flow properties or of the extent of the cross-linking during friction stir step R. This can be accomplished, for example, by the overlapping element having materials which melt at lower temperatures than the conductors 10, 11, 12.

In the example shown, the overlapping element 40 is a plate 41, for example a metal plate or a metal sheet. A plane defined by the overlapping element runs perpendicular to a plane defined by the connecting seam 51 or the joining gap 60.

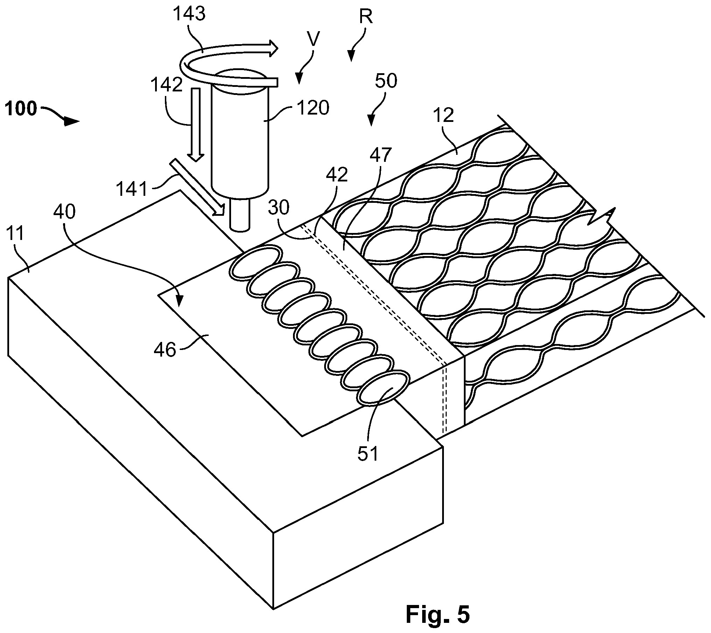

Fig. 5 shows a further embodiment. This differs from the configuration according to Fig. 4 in the shape of the overlapping element 40. In the region of the second section 47, the overlapping element has a U-shaped cross-section 42, so that the overlapping element 40 surrounds the second conductor 12 at least close to the joining gap 60 along the majority of the circumference 30 of the conductor 12. This can contribute to a fixing of the conductor wires 21. A compacting effect can also be obtained through such a U-shaped cross-section 42.

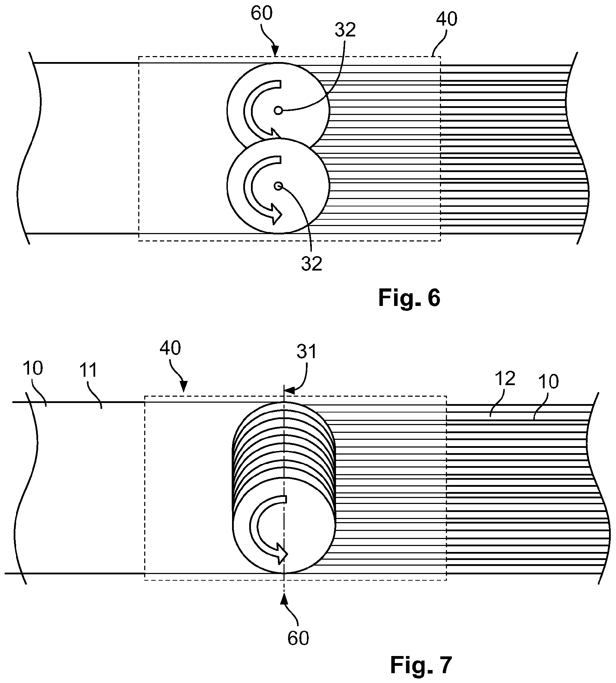

Figures 6 and 7 show two different variants of a friction stir welding step R. Fig. 6 shows only spot-welding, which means that connecting points 32 are created.

Fig. 7 shows welding along a line 31, which means that a continuous connecting seam 51 is created.

In both cases, an overlapping element 40 can be additionally used respectively.

Fig. 8 depicts various conductors 10, 11, 12. In the exemplary embodiments shown up to now, a second electrical conductor 12 has been used in each case with a conductor mesh 23. Alternatively, it is also possible to use a stranded conductor 24 which has several conductor wires 21 running parallel which are additionally embedded in an insulation 29.

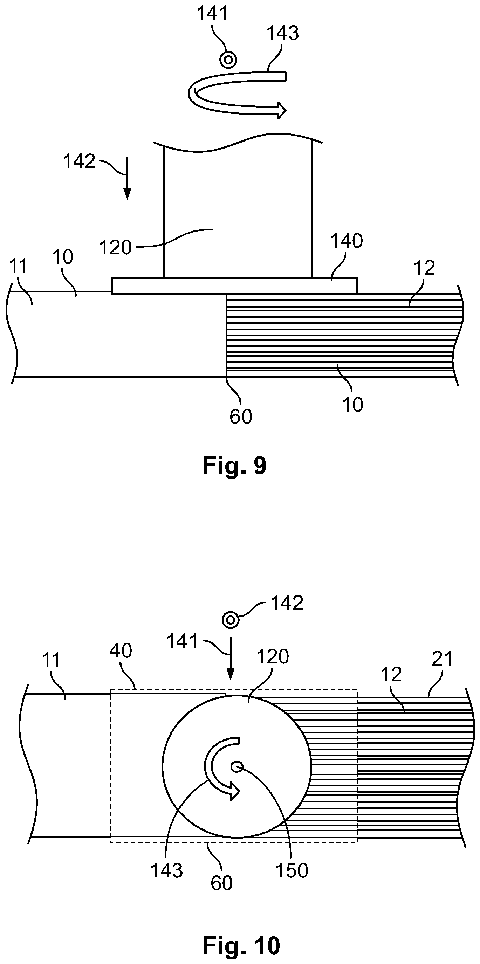

Fig. 9 shows a lateral view of a further exemplary embodiment of a method. Fig. 10 shows a top view of this method. Once again the friction stir welding head 120 is used to connect the two conductors 10, 11, 12. In the configuration shown here, the friction stir welding tool 21 has a size which is sufficient to cover the two conductors 10, 11, 12 along their entire width. A movement particularly along a movement direction 141 is therefore very short here or is eliminated completely.

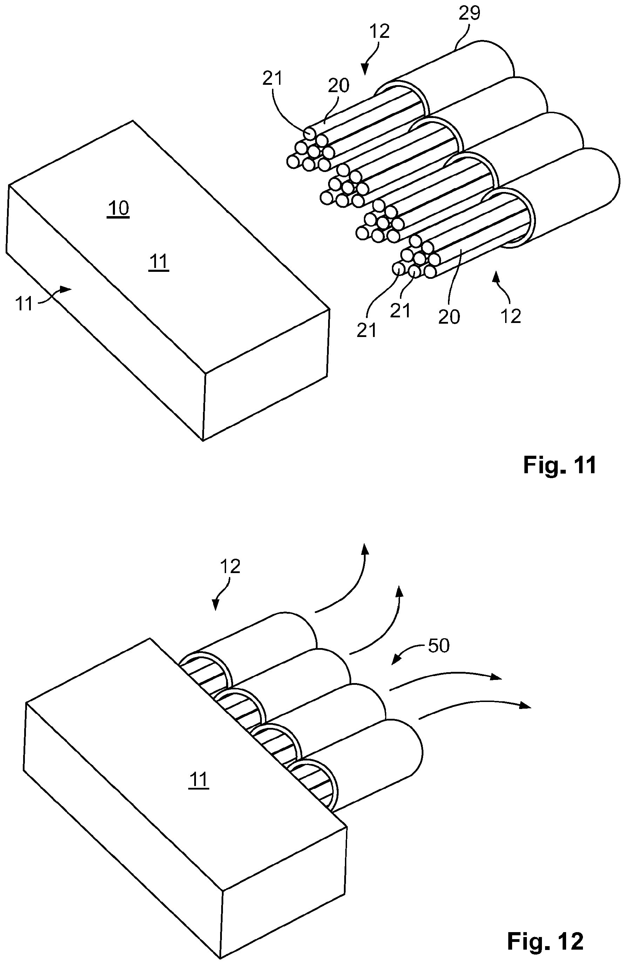

Fig. 11 shows a further embodiment of a method V, in which the multiple conductors 10, 11, 12 are connected to one another. The first conductor 11 is again a rigid element to which there are attached several flexible second conductors 12 which each comprise a bundle 20 of conductor wires 21. As schematically depicted in Fig. 12, with such an embodiment it is possible to produce a connection 50 which splits in a Y shape and in the case of which the various second conductors 12 depart in different directions from the first conductor 11.

### Reference Numerals

- 10: conductor
- 11: first electrical conductor
- 12: second electrical conductor
- 18: solid conductor
- 20: bundle
- 21: conductor wire
- 23: conductor mesh
- 24: stranded conductor
- 25: upper side
- 26: lateral surface
- 27: front side
- 28: strip-shaped conductor
- 29: insulation
- 30: circumference
- 31: line
- 32: connecting point
- 40: overlapping element
- 41: plate
- 42: U-shaped cross-section
- 46: first section
- 47: second section
- 50: electrical connection
- 51: connecting seam
- 60: joining gap
- 100: device
- 110: clamping device
- 111: clamping jaw
- 112: clamping jaw
- 113: clamping jaw
- 120: friction stir welding head
- 121: prolongation
- 122: shoulder
- 130: compacting device
- 140: connecting direction
- 141: movement direction
- 142: press-on direction
- 143: rotation direction
- 150: rotation axis
- 161: clamping direction
- 162: clamping direction
- 163: clamping direction

- R: friction stir welding step
- V: method

## Claims

1. A method (V) for joining two or more electrical conductors (10, 11, 12) by means of friction stir welding, **characterised in that** at least one of the conductors (10, 12) comprises a bundle (20) of conductor wires (21).

2. The method (V) according to Claim 1, wherein at least one of the conductors (10, 12) has a conductor mesh (23).

3. The method (V) according to Claim 1 or 2, wherein at least one of the conductors (10, 12) has a stranded conductor (24).

4. The method (V) according to any one of Claims 1 to 3, wherein one electrical conductor (10, 11, 12) comprises aluminium and the other conductor comprises copper (10, 12, 11).

5. The method (V) according to any one of Claims 1 to 4, wherein the bundle (20) is laterally clamped on a joining gap (60).

6. The method (V) according to any one of Claims 1 to 5, wherein the bundle (20) of conductor wires (21) is clamped on all sides along a circumference (30).

7. The method (V) according to any one of Claims 1 to 6, wherein the bundle (20) of conductor wires (21) is compacted before and/or during a friction stir welding step (R).

8. The method (V) according to any one of Claims 1 to 7, wherein a welding takes place at certain points.

9. The method (V) according to any one of Claims 1 to 8, wherein an overlapping element (40) is used, which overlaps each of the two conductors (10, 12) in part.

10. The method (V) according to Claim 9, wherein the overlapping element (40) surrounds the conductor (10, 12) with the bundle (20) at least in part.

11. The method (V) according to any one of Claims 9 or 10, wherein the overlapping element (40) comprises a material which has flow-improving and/or crosslinking-activating properties.

12. A device (100) for joining two or more electrical conductors (10, 11, 12) by means of friction stir welding, **characterised in that** the device (100) is configured so that at least one of the conductors (10, 12) comprises a bundle (20) of conductor wires (21).

13. The device (100) according to claim 12, wherein the device (100) has a clamping device (110), which clamps the bundle (20) of conductor wires (21) along a circumference (30).

14. An electrical connection (50) between two or more conductors (10, 11, 12), wherein the two or more conductors (10, 11, 12) are connected through a friction stir welding connection, **characterised in that** one of the conductors (10, 12) comprises a bundle (20) of conductor wires (21).

15. The electrical connection (50) according to Claim 14, wherein the connection (50) comprises an overlapping element (40).
